(19) Europäisches Patentamt
European Patent Office
Office européen des brevets

(11) **EP 4 119 304 A1**

(12) **EUROPEAN PATENT APPLICATION**
published in accordance with Art. 153(4) EPC

(43) Date of publication:
**18.01.2023 Bulletin 2023/03**

(21) Application number: **21767987.7**

(22) Date of filing: **09.03.2021**

(51) International Patent Classification (IPC):
***B25J 11/00*** *(2006.01)* ***B25J 9/16*** *(2006.01)*
***B25J 9/00*** *(2006.01)* ***A01D 34/00*** *(2006.01)*

(52) Cooperative Patent Classification (CPC):
**A01D 34/008; A01D 34/74; A01D 34/78; A01D 69/02; G05D 1/0219; G05D 1/0274;** G05D 2201/0208

(86) International application number:
**PCT/KR2021/002925**

(87) International publication number:
**WO 2021/182855 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2020 KR 20200029748**

(71) Applicant: **LG Electronics, Inc.**
**Yeongdeungpo-gu**
**Seoul 07336 (KR)**

(72) Inventors:
- **JUNG, Minkuk**
  **Seoul 08592 (KR)**
- **JU, Jeongwoo**
  **Seoul 08592 (KR)**

(74) Representative: **Ter Meer Steinmeister & Partner Patentanwälte mbB**
**Nymphenburger Straße 4**
**80335 München (DE)**

(54) **MOBILE ROBOT**

(57) A moving robot according to an aspect of the present invention includes a body configured to define an exterior, a travelling unit configured to move the body against a travelling surface of a travelling area, and a controller configured to divide a grid map corresponding to the travelling area into multi-maps composed of spaced lines, generate individual pattern routes using each of the multi-maps, and generate a final pattern route by integrating individual pattern routes generated from the multi-maps, and control the travelling unit to pattern travel in the travelling area based on the final pattern route.

Fig. 1

100
110
112
117
118
113
157
177a(177)
156
171a(171)
177b(177)
165
U
Le
F
R
Ri
D
171b(171)
164
121(120)

# Description

## BACKGROUND OF THE INVENTION

### Field of the invention

The present invention relates to an autonomous travelling moving robot and a method of controlling the moving robot, and to a pattern travelling of a moving robot with high efficiency and reliability in an outdoor environment.

### Description of the Related Art

Robots were developed for industrial use and prompted automation of production operations. Recently, they are being used more widely, for example, in the medical industry and the aerospace industry. There are even domestic robots used for household chores. Among such robots, a type of robot capable of traveling on it own is called a moving robot. A typical example of a moving robot used for a home's outdoor environment is a lawn mower robot.

For a moving robot travelling in an indoor space, an movable area is restricted by a wall or furniture, and, for a moving robot travelling an outdoor space, it is necessary to set a movable area in advance. In addition, a movable area needs to be limited to allow the lawn mower robot to travel on a grass area.

In a prior art (Korean Patent Application Publication No. 2015-0125508), a wire for setting an area to be travelled by a lawn mower robot may be installed in the lawn mower robot, and the lawn mower robot may sense a magnetic field formed by currents flowing by the wire and move in an area set by the wire.

In addition, when limiting movement by setting a border, a virtual wall may be set by transmitting a signal in a beacon method to limit the movement of the moving robot.

In this way, the lawn mower robot travels within a limited travel area and performs lawn mowing.

The lawn mower robot may mow the lawn while traveling in a travel area randomly, but there is a problem in that efficiency is deteriorated by repeatedly visiting the same place.

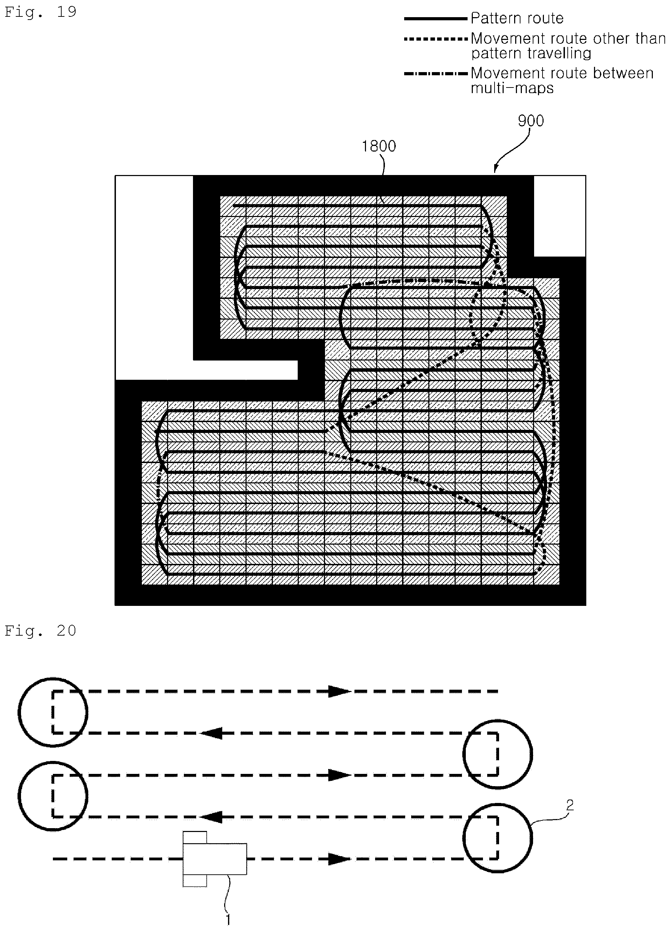

Therefore, the lawn mower robot moves in a zigzag pattern in a traveling area and mows the lawn in many cases to improve efficiency. FIG. 20 is a diagram illustrating a pattern route of zigzag pattern travelling. Referring to FIG. 20, the moving robot 1 rotates 90 degrees while traveling straight along a major axis, and then rotates 90 degrees again after traveling straight along the minor axis, and changes direction to the next major axis. At this time, the lawn may be damaged by repeatedly performing rotation in a narrow area in the direction change section 2 in which 90 degrees rotation is repeated. In particular, in the case where the moving robot 1 changes its direction in a manner that rotates 90 degrees in its place in the direction change section 2, the possibility of lawn damage may increase further.

## Disclosure

### Technical Problem

Pattern travelling of the prior art has a problem with a large possibility of lawn damage. An object of the present invention is to minimize damage to the lawn by minimizing a right angle pattern that rotates 90 degrees during pattern travelling.

An object of the present invention is to provide a moving robot with high efficiency and reliability in an outdoor environment and a control method thereof.

It is an object of the present invention to provide a moving robot with improved efficiency and reduce the possibility of lawn damage by minimizing a repetitively traveling area to and a control method thereof.

Another object of the present invention is to provide a moving robot capable of effectively establishing a pattern route during pattern travelling and a control method thereof.

### Technical Solution

In order to achieve the above or other objects, a moving robot according to an aspect of the present invention may minimize damage to the lawn by minimizing a right angle pattern that rotates 90 degrees during pattern travelling.

In order to achieve the above or other objects, a moving robot according to an aspect of the present invention may generate individual pattern routes after dividing the map according to a predetermined criterion, and integrating the generated individual pattern routes to generate a final pattern route.

In order to achieve the above or other objects, a moving robot according to an aspect of the present invention includes a body configured to define an exterior, a travelling unit configured to move the body against a travelling surface of a travelling area, and a controller configured to divide a grid map corresponding to the travelling area into multi-maps composed of spaced lines, generate individual pattern routes using each of the multi-maps, and generate a final pattern route by integrating individual pattern routes generated from the multi-maps, and control the travelling unit to pattern travel in the travelling area based on the final pattern route.

Meanwhile, in order to achieve the above or another object, a moving robot according to an aspect of the present invention further includes a blade rotatably provided under the body, and a grid size of the grid map is based on a size of the blade. In this case, the lines included in the multi-maps may be spaced apart at least twice the size of the blade in the grid map.

Meanwhile, a width for division of the grid map may be based on a minimum turning radius for changing a direction in a direction opposite to a travelling direction in a circular motion during straight travelling.

In addition, in order to achieve the above or other objects, a moving robot according to an aspect of the present invention further includes a blade rotatably provided under the body, and the width is determined as the minimum value among a number that satisfies a first condition greater than or equal to twice the minimum rotation radius, and a second condition greater than or equal to an integer multiple of the blade size.

In addition, the controller may generate the multi-maps by dividing the grid map by a number corresponding to a value obtained by dividing the width by the grid size of the grid map.

In addition, the controller may generate multi-maps by dividing the grid map in units of the width and extracting one line per unit of the divided width.

Meanwhile, the controller may generate a first multi-map by generating first to nth unit maps of the grid map in the width unit, generate a first multi-map by collecting first lines from the first to nth unit maps, and, generate a second multi-map by collecting second lines from the first to the n-th unit map.

Meanwhile, the pattern travelling may include a circular motion for direction change and straight travel.

Meanwhile, the controller may generate a final pattern route on the grid map by mapping individual pattern routes generated from the multi-maps to grids corresponding to the original grid map before division.

Meanwhile, the controller may generate the individual pattern routes in a zigzag pattern in which a major axis and a minor axis are alternately traveling straight.

Meanwhile, when it is necessary to select a pattern direction in an arbitrary grid, the controller generate the individual pattern route by selecting a pattern direction with a first priority in an area with a small number of obstacles, and selecting the pattern direction with a second priority in an area in which no route is generated.

Meanwhile, when it is necessary to select a pattern direction in an arbitrary grid, the controller may select a shortest route from an area in which a route is not generated.

Meanwhile, a starting point or an ending point of generating an individual pattern route of a multi-map may be based on at least one starting point or ending point among other multi-maps.

Meanwhile, when generating an individual pattern route in a multi-map, the controller may determine a starting point based on an ending point of an individual pattern route of the multi-map previously generated.

Meanwhile, when it is necessary to select the next location between multi-maps, the controller may select a next location from different multi-map based on the ending point of an individual pattern route of the multi-map previously generated and the minimum turning radius for changing the direction in a direction opposite to the travelling direction by circular motion during straight travelling.

In addition, the controller may select a next location as a shortest route among grids separated by more than the minimum rotation radius based on a grid corresponding to an ending point of an individual pattern route of the previously generated multi-map in the grid map.

Meanwhile, the controller may generate the final pattern route by matching individual pattern routes generated from the multi-maps on the grid map, and connecting grids corresponding to the starting and ending points of the individual pattern routes.

Meanwhile, a grid size of the grid map may be based on the size of the moving robot.

## Advantageous Effects

According to at least one of the embodiments of the present invention, there is an advantage in that damage to the lawn may be minimized by minimizing a right angle pattern that rotates 90 degrees during pattern travelling.

In addition, according to at least one of the embodiments of the present invention, it is possible to provide a moving robot having high efficiency and reliability in an outdoor environment and a control method thereof.

In addition, according to at least one of the embodiments of the present invention, it is possible to provide a moving robot with improved efficiency and an improved efficiency by minimizing a repetitively traveling area to reduce the possibility of lawn damage.

In addition, according to at least one of the embodiments of the present invention, it is possible to effectively establish a pattern route during pattern travelling.

## BRIEF DESCRIPTION OF THE DRAWINGS

FIG. 1 is a perspective view of a moving robot 100 according to the present disclosure;
FIG. 2 is a front view of the moving robot of FIG. 1;
FIG. 3 is a right side view of the moving robot shown in FIG. 1;
FIG. 4 is a bottom view of the moving robot 100 shown in FIG. 1;
FIG. 5 is a perspective view of a docking device for docking the moving robot shown in FIG. 1;
FIG. 6 is a front view of the docking device shown in FIG. 5;
FIG. 7 is a block diagram illustrating a control relation of the moving robot shown in FIG. 1;
FIG. 8 is a flowchart of a method for controlling a moving robot according to an embodiment of the present invention.
FIGS. 9 to 19 are views referenced for description of a method for controlling a moving robot according to an embodiment of the present invention.
FIG. 20 is a diagram illustrating a pattern route of zigzag pattern travelling.

## DETAILED DESCRIPTION OF THE EMBODIMENTS

The terms "forward (F)/rearward (R)/upward (U)/downward (D)/indoor (I)/outdoor (O)" mentioned in the following description are defined as shown in the drawings. However, the terms are used merely to clearly understand the present invention, and therefore the above-mentioned directions may be differently defined.

The terms "first", "second" etc. are used to distinguish elements, and not related to a sequence, importance levels, or a master-servant relationship of elements. For example, only a second element may be included without a first element.

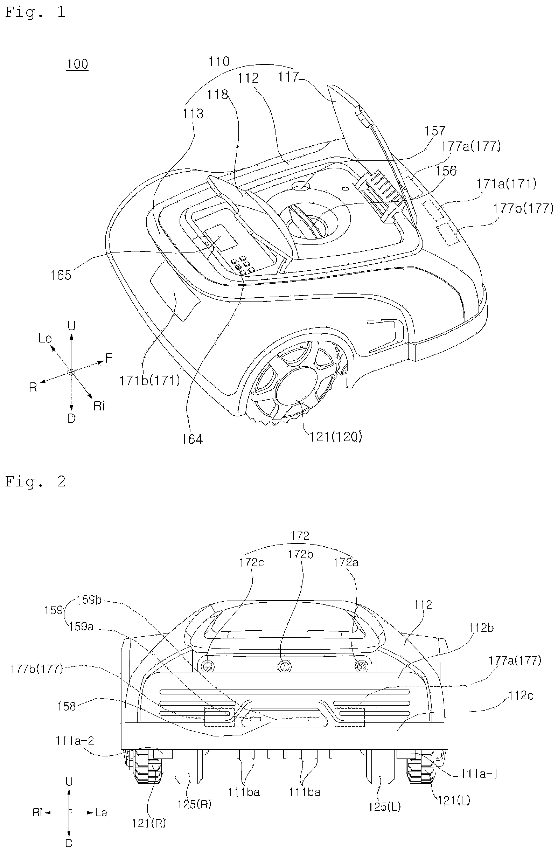

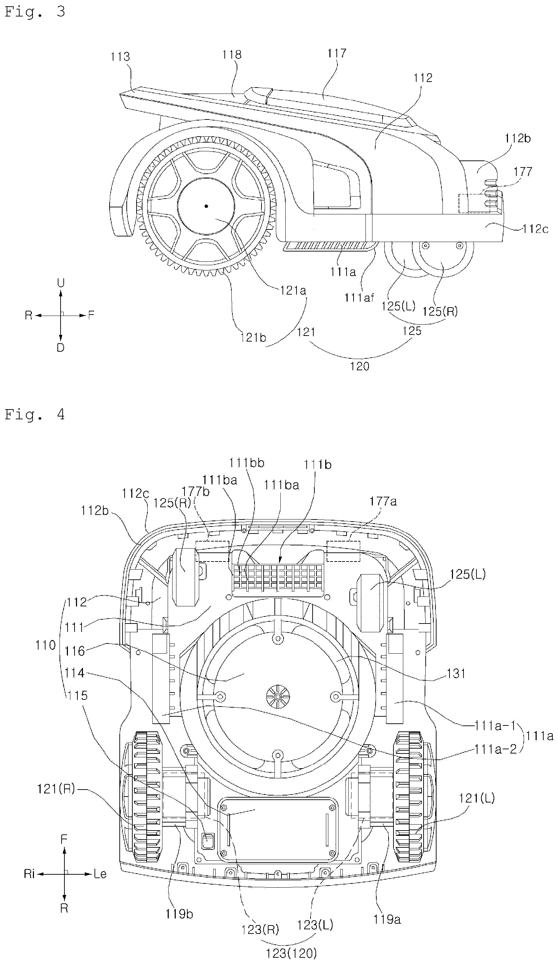

Hereinafter, a moving robot is described as a lawn mower 100 with reference to FIGS. 1 to 6, but the present disclosure is not necessarily limited thereto.

With reference to FIGS. 1 to 4, a moving robot 100 includes a body 110 that defines an exterior of the moving robot 100. The body 110 forms an inner space. The moving robot 100 includes a travelling unit 120 that moves the body 110 against a travel surface. The moving robot 100 includes an operation unit 130 that performs a predetermined operation.

The body 110 includes a frame 111 to which a driving motor module 123, which will be described later, is fixed. A blade motor 132, which will be described later, is fixed to the frame 111. The frame 111 supports a battery which will be described later. The frame 111 provides a structure which supports even other components which are not mentioned herein. The frame 111 is supported by an auxiliary wheel 125 and a driving wheel 121.

The body 110 includes a lateral blocking part 111a which prevent a user's finger from entering a blade 131 from a side of the blade 131. The lateral blocking part 111a is fixed to the frame 111. The lateral blocking part 111a is projected downward, compared to a button surface of an other part of the frame 111. The lateral blocking part 111a is arranged to cover an upper side of a space between the driving wheel 121 and the auxiliary wheel 125.

A pair of lateral blocking parts 111a-1 and 111a-2 is arranged on the left and right sides to the blade 131. The lateral blocking part 111a is spaced a predetermined distance apart from the blade 131.

A front surface 111af of the lateral blocking part 111a is formed in a round shape. The front surface 111af forms a surface that is bent in a round manner upwardly in a forward direction from a bottom surface of the lateral blocking part 111a. By use of the shape of the front surface 111af, the lateral blocking parts 111a is able to easily go over an obstacle of a predetermined height or lower thereunder when the moving robot 100 moves forward.

The body 110 includes a front blocking part 111b which prevents a user's finger from entering between the blade 131 from the front of the blade 131. The front blocking part 111b is fixed to the frame 111. The front blocking part 111b is arranged to partially cover an upper side of a space between a pair of auxiliary wheels 125(L) and 125(R).

The front blocking part 111b includes a projected rib 111ba which is projected downward compared to a bottom surface of another part of the frame 111. The projected rib 111ba extends in a front-rear direction. An upper portion of the projected rib 111ba is fixed to the frame 111, and a lower portion of the projected rib 111ba forms a free end.

A plurality of projected ribs 111ba may be spaced apart leftward and rightward from each other. The plurality of projected ribs 111ba may be arranged in parallel to each other. A gap is formed between two adjacent projected ribs 111ba.

A front surface of the projected ribs 111ba is formed in a round shape. The front surface of the projected rib 111ba forms a surface that is bent in a round manner upwardly in a forward direction from a bottom surface of the projected rib 111ba. By use of the shape of the front surface of the projected rib 111ba, the projected rib 111ba is able to easily go over an obstacle of a predetermined height or lower thereunder when the moving robot 100 moves forward.

The front blocking part 111b includes an auxiliary rib 111bb which reinforces rigidity. The auxiliary ribs 111bb for reinforcing rigidity of the front blocking part 111b is arranged between upper portions of two adjacent projected ribs 111ba. The auxiliary rib 111bb may be projected downward and may be in a lattice shape which extends.

In the frame 111, a caster which supports the auxiliary wheel 125 rotatably is arranged. The caster is arranged rotatable with respect to the frame 111. The caster is disposed rotatable about a vertical axis. The caster is disposed in a lower side of the frame 111. The caster is provided as a pair of casters corresponding to the pair of auxiliary wheels 125.

The body 110 includes a case 112 which covers the frame 111 from above. The case 112 defines a top surface and front/rear/left/right surfaces of the moving robot 100.

The body 110 may include a case connection part (not shown) which fixes the case 112 to the frame 111. An upper portion of the case connection part may be fixed to the case 112. The case connection part may be arranged movable with respect to the frame 111. The case connection part may be arranged movable only upwardly and downwardly with the frame 111. The case connection part may be provided movable in a predetermined range. The case connection part moves integrally with the case 112. Accordingly, the case 112 is movable with respect to the frame 111.

The body 110 includes a bumper 112b which is disposed at the front. The bumper 112b absorbs an impact upon collision with an external obstacle. At a front surface of the bumper 112b, a bumper groove recessed rearward and elongated in a left-right direction may be formed. The bumper groove may be provided as a plurality of bumper grooves spaced apart from each other in an upward-downward direction. A lower end of the projected rib 111ba is positioned lower than a lower end of the auxiliary rib 111bb.

The front surface and the left and right surfaces of the bumper 112b are connected. The front surface and the left and right surfaces of the bumper 112b are connected in a round manner.

The body 110 may include an auxiliary bumper 112c which is disposed embracing an exterior surface of the bumper 112b. The auxiliary bumper 112c is coupled to the bumper 112b. The auxiliary bumper 112c embraces lower portions of the front, left, and right surfaces of the bumper 112b. The auxiliary bumper 112c may cover the lower half portions of the front, left, and right surfaces of the bumper 112b.

The front surface of the auxiliary bumper 112c is disposed ahead of the front surface of the bumper 112b. The auxiliary bumper 112c forms a surface projected from a surface of the bumper 112b.

The auxiliary bumper 112c may be formed of a material which is advantageous in absorbing impact, such as rubber. The auxiliary bumper 112c may be formed of a flexible material.

The frame 111 may be provided with a movable fixing part (not shown) to which the bumper 112b is fixed. The movable fixing part may be projected upward of the frame 111. The bumper 112b may be fixed to an upper portion of the movable fixing part.

The bumper 112b may be disposed movable in a predetermined range with the frame 111. The bumper 112b may be fixed to the movable fixing part and thus movable integrally with the movable fixing part.

The movable fixing part may be disposed movable with respect to the frame 111. The movable fixing part may be rotatable about a virtual rotation axis in a predetermined range with the frame 111. Accordingly, the bumper 112b may be movable integrally with the movable fixing part with respect to the frame 111.

The body 110 includes a handle 113. The handle 113 may be disposed at the rear of the case 112.

The body 110 includes a battery slot 114 which a battery is able to be inserted into and separated from. The battery slot 114 may be disposed at a bottom surface of the frame 111. The battery slot 114 may be disposed at the rear of the frame 111.

The body 110 includes a power switch 115 to turn on/off power of the moving robot 100. The power switch 115 may be disposed at the bottom surface of the frame 111.

The body 110 includes a blade protector 116 which hides the lower side of the central portion of the blade 131. The blade protector 116 is provided to expose centrifugal portions of blades of the blade 131 while hiding the central portion of the blade 131.

The body 110 includes a first opening and closing door 117 which opens a portion in which a height adjuster 156 and a height indicator 157 are arranged. The first opening and closing door 117 is hinge-coupled to the case 112 to be opened and closed. The first opening and closing door 117 is arranged in a top surface of the case 112.

The first opening and closing door 117 is formed in a plate shape, and, when closed, covers the top of the height adjuster 156 and the height indicator.

The body 110 includes a second opening and closing door 118 which opens and closes a portion in which a display module 165 and an input unit 164 is arranged. The second opening and closing door 118 is hinge-coupled to the case 112 to be opened and closed. The second opening and closing door 118 is arranged in a top surface of the case 112. The second opening and closing door 118 is disposed behind the first opening and closing door 117.

The second opening and closing door 118 is formed in a plate shape, and, when closed, covers the display module 165 and the input unit 164.

An available opening angle of the second opening and closing door 118 is predetermined to be smaller than an available opening angle of the first opening and closing door 117. In doing this, even when the second opening and closing door 118 is opened, a user is allowed to easily open the first opening and closing door 117 and easily manipulate the height adjuster 156. In addition, even when the second opening and closing door 118 is opened, the user is allowed to visually check content of the height display 157.

For example, the available opening angle of the first opening and closing door 117 may be about 80 to 90 degrees with reference to the closed state of the first opening 117. For example, the available opening angle of the second opening and closing door 118 may be about 45 to 60 degrees with reference to the closed state of the second opening and closing door 118.

A rear of the first opening and closing door 117 is lifted upward from a front thereof to thereby open the first opening and closing door 117, and a rear of the second opening and closing door 118 is lifted upward from a front thereof to thereby open the second opening and closing door 118. In doing so, even while the lawn mower 100 moves forward, a user located in an area behind the lawn mower 100, which is a safe area, is able to open and close the first opening and closing door 117 and the second opening and closing door 118. In addition, in doing so, opening of the first opening and closing door 117 and opening of the second opening and closing door 118 may be prevented from intervening each other.

The first opening and closing door 117 may be rotatable with respect to the case 112 about a rotation axis which extends from the front of the first opening and closing door 117 in a left-right direction. The second opening and closing door 118 may be rotatable with respect to the case 112 about a rotation axis which extends from the front of the second opening and closing door 118 in the left-right direction.

The body 110 may include a first motor housing 119a which accommodates a first driving motor 123(L), and a second motor housing 119b which accommodates a second driving motor 123(R). The first motor housing 119a may be fixed to the left side of the frame 111, and the second motor housing 119b may be fixed to the right side of the frame 111. A right end of the first motor housing 119a is fixed to the frame 111. A left end of the second motor housing 119b is fixed to the frame 111.

The first motor housing 119a is formed in a cylindrical shape that defines a height in the left-right direction. The second motor housing 119b is formed in a cylindrical shape that defines a height in the left-right direction.

The traveling unit 120 includes the driving wheel 121 that rotates by a driving force generated by the driving motor module 123. The traveling unit 120 may include at least one pair of driving wheels 121 which rotate by a driving force generated by the driving motor module 123. The driving wheel 121 may include a first wheel 121(L) and a second wheel 121(R), which are provided on the left and right sides and rotatable independently of each other. The first wheel 121(L) is arranged on the left side, and the second wheel 121(R) is arranged on the right side. The first wheel 121(L) and the second wheel 121(R) are spaced apart leftward and rightward from each other. The first wheel 121(L) and the second wheel 121(R) are arranged in a lower side at the rear of the body 110.

The first wheel 121(L) and the second wheel 121(R) are rotatable independently of each other so that the body 110 is rotatable and forward movable relative to a ground surface. For example, when the first wheel 121(L) and the second wheel 121(R) rotate at the same speed, the body 110 is forward movable relative to the ground surface. For example, when a rotation speed of the first wheel 121(L) is faster than a rotation speed of the second wheel 121(R) or when a rotation direction of the first wheel 121(L) and a rotation direction of the second wheel 121(R) are different from each other, the body 110 is rotatable against the ground surface.

The first wheel 121(L) and the second wheel 121(R) may be formed to be greater than the auxiliary wheel 125. A shaft of the first driving motor 123(L) may be fixed to the center of the first wheel 121(L), and a shaft of the second driving motor 123(R) may be fixed to the center of the second wheel 121(R).

The driving wheel 121 includes a wheel circumference part 121b which contacts the ground surface. For example, the wheel circumference part 121b may be a tire. In the wheel circumference part 121b, a plurality of projections for increasing a frictional force with the ground surface may be formed.

The driving wheel 121 may include a wheel fame (not shown), which fixes the wheel circumference part 121b and receives a driving force for the motor 123. A shaft of the motor 123 is fixed to the center of the wheel frame to receive a rotation force. The wheel circumference part 121b is arranged surrounding a circumference of the wheel frame.

The driving wheel 121 includes a wheel cover 121a which covers an exterior surface of the wheel frame. With reference to the wheel frame, the wheel cover 121a is arranged in a direction opposite to a direction in which the motor 123 is arranged. The wheel cover 121a is arranged at the center of the wheel circumference part 121b.

The traveling unit 120 includes the driving motor module 123 which generates a driving force. The traveling unit 120 includes the driving motor module 123 which provides a driving force for the driving wheel 121. The driving motor module 123 includes the first driving motor 123(L) which provides a driving force for the first wheel 121(L), and the second driving motor 123(R) which provides a driving force for the second wheel 121(R). The first driving motor 123(L) and the second driving motor 123(R) may be spaced apart leftward and rightward from each other. The first driving motor 123(L) may be disposed on the left side of the second driving motor 123(R).

The first driving motor 123(L) and the second driving motor 123(R) may be arranged at a lower side of the body 110. The first driving motor 123(L) and the second driving motor 123(R) may be arranged at the rear of the body 110.

The first driving motor 123(L) may be arranged on the right side of the first wheel 121(L), and the second driving motor 123(R) is arranged on the left side of the second wheel 121(R). The first driving motor 123(L) and the second driving motor 123(R) are fixed to the body 110.

The first driving motor 123(L) may be arranged inside the first motor housing 119a, with a motor shaft being projected leftward. The second driving motor 123(R) may be arranged inside the second motor housing 119b, with a motor shaft being projected rightward.

In this embodiment, the first wheel 121(L) and the second wheel 121(R) may be connected to a rotation shaft of the first driving motor 123(L) and a rotation shaft of the second driving motor 123(R), respectively. Alternatively, a component of a shaft or the like may be connected to the first wheel 121(L) and the second wheel 121(R). Alternatively, a rotation force of the motor 123(L) or 123(R) may be transferred to the wheel 121a or 121b by a gear or a chain.

The traveling unit 120 may include the auxiliary wheel 135 which supports the body 110 together with the driving wheel 121. The auxiliary wheel 125 may be disposed ahead of the blade 131. The auxiliary wheel 125 is a wheel which does not receives a driving force generated by a motor, and the auxiliary wheel 125 auxiliarily supports the body 110 against the ground surface. The caster supporting a rotation shaft of the auxiliary wheel 125 is coupled to the frame 111 to be rotatable about a vertical axis. There may be provided a first auxiliary wheel 125(L) arranged on the left side, and a second auxiliary wheel 125(R) arranged on the right side.

The operation unit 130 is provided to perform a predetermined operation. The operation unit 120 is arranged at the body 110.

In one example, the operation unit 130 may be provided to perform an operation such as cleaning or lawn mowing. In another example, the operation unit 130 may be provided to perform an operation such as transferring an object or finding an object. In yet another embodiment, the operation unit 130 may perform a security function such as sensing an intruder or a dangerous situation in the surroundings.

In this embodiment, the operation unit 130 is described as moving lawn, but there may be various types of operation performed by the operation unit 120 and not limited to this embodiment.

The operation unit 130 may include the blade 131 which are rotatably provided to mow lawn. The operation unit 130 may include a blade motor 132 which provides a rotation force for the blade 131.

The blade 131 is arranged between the driving wheel 121 and the auxiliary wheel 125. The blade 131 is arranged on a lower side of the body 110. The blade 131 is exposed from the lower side of the body 110. The blade 131 mows lawn by rotating about a rotation shaft which extends in an upward-downward direction.

A blade motor 132 may be arranged ahead of the first wheel 121(L) and the second wheel 121(R). The blade motor 132 is disposed in a lower side of the center in the inner space of the body 110.

The blade motor 132 may be disposed at the rear of the auxiliary wheel 125. The blade motor 132 may be arranged in a lower side of the body 110. A rotational force of the motor axis is transferred to the blade 131 using a structure such as a gear.

The moving robot 100 includes a battery (not shown) which provides power for the driving motor module 123. The battery provides power to the first driving motor 123(L). The battery provides power for the second driving motor 123(R). The battery may provide power for the blade motor 132. The battery may provide power for a controller 190, an azimuth angle sensor 176, and an output unit 165. The battery may be arranged in a lower side of the rear in the indoor space of the body 110.

The moving robot 100 is able to change a height of the blade 131 from the ground, and change a lawn cutting height. The moving robot 100 includes the height adjuster 156 by which a user is able to change a height of the blade 131. The height adjuster 156 may include a rotatable dial and may change the height of the blade 131 by rotating the dial.

The moving robot 100 includes the height indicator 157 which displays a degree of the height of the blade 131. When the height of the blade 131 is changed upon manipulation of the height adjuster 156, the height displayed by the height display 157 is also changed. For example, the height display 157 may display a height value of grass that is expected after the moving robot 100 mows lawn with the current height of the blade 131.

The moving robot 100 includes a docking insertion part 158 which is connected to a docking device 200 when the moving robot 100 is docked to the docking device 200. The docking insertion part 158 is recessed such that a docking connection part 210 of the docking device 200 is inserted into the docking insertion part 158. The docking insertion part 158 is arranged in the front surface of the body 110. Due to connection of the docking insertion part 158 and the docking connection part 210, the moving robot 100 may be guided to a correct position upon a need of charge.

The moving robot 100 may include a charging counterpart terminal 159 which is disposed at a position to be in contact with a charging terminal 211, which will be described later, when the docking connection part 210 is inserted into the docking insertion part 158. The charging counterpart terminal 159 includes a pair of charging counterpart terminals which are disposed at positions corresponding to a pair of charging terminals 211a and 211b. The pair of charging counterpart terminals 159a and 159b may be disposed on the left and right sides of the docking insertion part 158.

A terminal cover (not shown) for openably/closably covering the pair of charging terminals 211a and 211b may be provided. While the moving robot 100 travels, the terminal cover may cover the docking insertion part 158 and the pair of charging terminals 211a and 211b. When the moving robot 100 is connected with the docking device 200, the terminal cover may be opened, and therefore, the docking insertion part 158 and the pair of charging terminals 211a and 211b may be exposed.

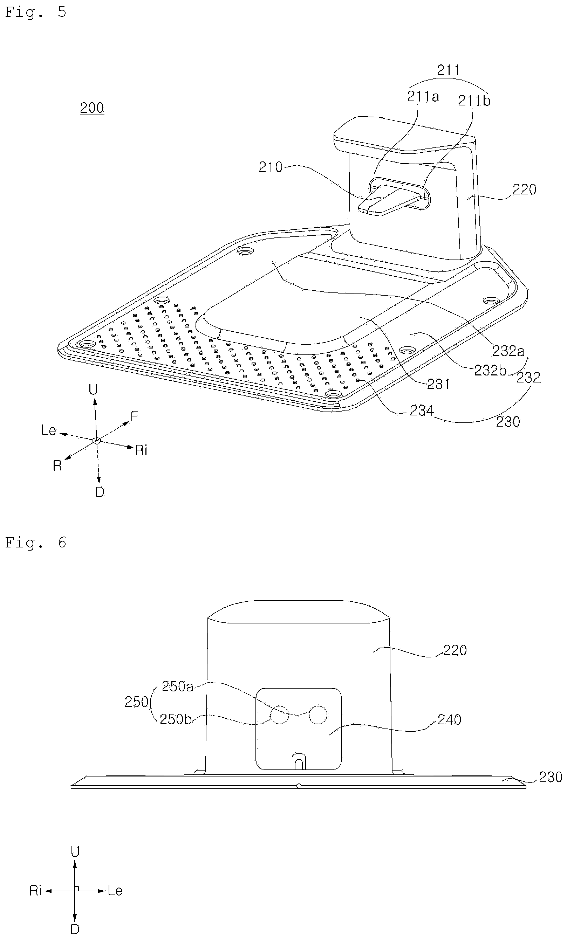

Meanwhile, referring to FIGS. 5 to 6, the docking device 200 includes a docking base 230 disposed at a floor, and a docking support 220 projected upwardly from the front of the docking base 230. The docking device 200 includes the docking connection part 210 which is inserted into the docking insertion part 158 to charge the moving robot 100. The docking connection part 210 may be projected rearward of the docking support 220.

The docking connection part 210 may be formed to have a vertical thickness smaller than a horizontal thickness. A horizontal width of the docking connection part 210 may be narrowed toward the rear. As viewed from above, the docking connection part 210 is broadly in a trapezoidal shape. The docking connection part 210 is vertically symmetrical. The rear of the docking connection part 210 forms a free end, and the front of the docking connection part 210 is fixed to the docking support 220. The rear of the docking connection part 210 may be formed in a round shape.

When the docking connection part 210 is fully inserted into the docking insertion part 158, charging of the moving robot 100 by the docking deice 200 may be performed.

The docking device 200 includes the charging terminal 211 to charge the moving robot 100. As the charging terminal 211 and the charging counterpart terminal 159 of the moving robot 100 are brought into contact with each other, charging power may be supplied from the docking device 200 to the moving robot 100.

The charging terminal 211 includes a contact surface facing rearward, and the charging counterpart terminal 159 includes a contact counterpart surface facing forward. As the contact surface of the charging terminal 211 is brought into contact with the contact counterpart surface of the charging counterpart terminal 159, power of the docking device 200 is connected with the moving robot 100.

The charging terminal 211 may include a pair of charging terminals 211a and 211b which form a positive polarity (+) and a negative polarity (-), respectively. The first charging terminal 211a is provided to come into contact with the first charging counterpart terminal 159a, and the second charging terminal 211b is provided to come into contact with the second charging counterpart terminal 159b.

The pair of charging terminals 211a and 211b may be arranged with the docking connection part 210 therebetween. The pair of charging terminals 211a and 211b may be arranged on the left and right sides of the docking connection part 210.

The docking base 230 includes a wheel guard 232 on which the driving wheel 121 and the auxiliary wheel 125 of the moving robot 100 are to be positioned. The wheel guard 232 includes a first wheel guard 232a which guides movement of the first auxiliary wheel 125(L), and a second wheel guard 232b which guides movement of the second auxiliary wheel 125(R). Between the first wheel guard 232a and the second wheel guard 232b, there is a central base 231 which is convex upwardly. The docking base 230 includes a slip prevention part 234 to prevent slipping of the first wheel 121(L) and the second wheel 121(R). The slip prevention part 234 may include a plurality of projections which are projected upwardly.

Meanwhile, a wire (not shown) for setting a border of a travel area of the moving root 100 may be provided. The wire may generate a predetermined border signal. By detecting the border signal, the moving robot 100 is able to recognize the border of the travel area set by the wire.

For example, as a predetermined current is allowed to flow along the wire, a magnetic field may be generated around the wire. The generated magnetic field is the aforementioned border signal. As an alternating current with a predetermined pattern of change are allowed to flow in the wire, a magnetic field generated around the wire may change in the predetermined pattern of change. Using a border signal detector 177 for detecting a magnetic field, the moving robot 100 may recognize that the moving robot 100 has approached the wire within a predetermined distance, and accordingly, the moving robot 100 may travel only in a travel area within a border set by the wire.

The docking unit 200 may play a role of transferring a predetermined current to the wire. The docking device 200 may include a wire terminal 250 connected to the wire. Both ends of the wire may be connected to a first wire terminal 250a and a second wire terminal 250b. Through the connection between the wire and the wire terminal 250, a power supply of the docking device 200 may supply a current to the wire.

The wire terminal 250 may be disposed at the front (F) of the docking device 200. That is, the wire terminal 250 may be disposed at a position opposite to a direction in which the docking connection part 210 is projected. The wire terminal 250 may be disposed in the docking support 220. The first wire terminal 250a and the second wire terminal 250b may be spaced apart leftward and rightward from each other.

The docking device 200 may include a wire terminal opening and closing door 240 which openably/closably covers the wire terminal 250. The wire terminal opening and closing door 240 may be disposed at the front (F) of the docking support 220. The wire terminal opening and closing door 240 may be hinge-coupled to the docking support 220 to be opened and closed by rotation.

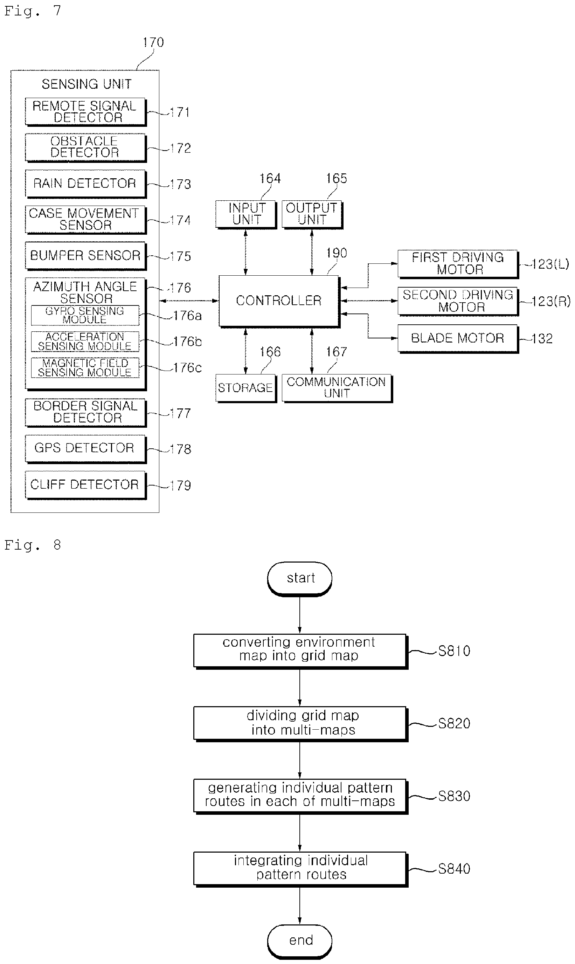

Meanwhile, referring to FIG. 7, the moving robot 100 may include the input unit 164 through which various instructions from a user is allowed to be input. The input unit 164 may include a button, a dial, a touch-type display, etc. The input unit 164 may include a microphone to recognize a voice. In this embodiment, a plurality of buttons is arranged in an upper side of the case 112.

The moving robot 100 may include the output unit 165 to output various types of information to a user. The output unit 165 may include a display module which displays visual information. The output unit 165 may include a speaker (not shown) which outputs audible information.

In this embodiment, the display module 165 outputs an image in an upward direction. The display module 165 is arranged in the upper side of the case 112. In one example, the display module 165 may include a thin film transistor Liquid-Crystal Display (LCD). In addition, the display module 165 may be implemented using various display panels such as a plasma display panel, an organic light emitting diode display panel, etc.

The moving robot 100 includes a storage 166 which stores various types of information. The storage 166 stores various types of information necessary to control the moving robot 100, and the storage 166 may include a volatile or non-volatile recording medium. The storage 166 may store information input through the input unit 164 or information received through a communication unit 167. The storage 166 may store a program required to control the moving robot 100.

The moving robot 100 may include the communication unit 167 to communicate with an external device (a terminal and the like), a server, a router, etc. For example, the communication unit 167 may be capable of performing wireless communication with a wireless communication technology such as IEEE 802.11 WLAN, IEEE 802.15 WPAN, UWB, Wi-Fi, Zigbee, Z-wave, Blue-Tooth, etc. The communication unit 167 may differ depending on a target device to communication or a communication method of a server.

The moving robot 100 includes a sensing unit 170 which senses a state of the moving robot 100 or information relating to an environment external to the moving robot 100. The sensing unit 170 may include at least one of a remote signal detector 171, an obstacle detector 172, a rain detector 173, a case movement sensor 174, a bumper sensor 175, an azimuth angle sensor 176, a border signal detector 177, a Global Positioning System (GPS) detector 178, or a cliff detector 179.

The remote signal detector 171 receives an external remote signal. Once a remote signal from an external remote controller is transmitted, the remote signal detector 171 may receive the remote signal. For example, the remote signal may be an infrared signal. The signal received by the remote signal detector 171 may be processed by a controller 190.

A plurality of remote signal detectors 171 may be provided. The plurality of remote signal detectors 171 may include a first remote signal detector 171a disposed at the front of the body 110, and a second remote signal detector 171b disposed at the rear of the body 110. The first remote signal detector 171a receives a remote signal transmitted from the front. The second remote signal detector 171b receives a remote signal transmitted from the rear.

The obstacle detector 172 senses an obstacle around the moving robot 100. The obstacle detector 172 may sense an obstacle in the front. A plurality of obstacle detectors 172a, 172b, and 172c may be provided. The obstacle detector 172 is disposed at a front surface of the body 110. The obstacle detector 172 is disposed higher than the frame 111. The obstacle detector 172 may include an infrared sensor, an ultrasonic sensor, a Radio Frequency (RF) sensor, a geomagnetic sensor, a Position Sensitive Device (PSD) sensor, etc.

The rain detector 173 senses rain when it rains in an environment where the moving robot 100 is placed. The rain detector 173 may be disposed in the case 112.

The case movement sensor 174 senses movement of the case connection part. If the case 112 is lifted upward from the frame 111, the case connection part moves upward and accordingly the case movement sensor 174 senses the lifted state of the case 112. If the case movement sensor 174 senses the lifted state of the case 112, the controller 190 may perform a control action to stop operation of the blade 131. For example, if a user lifts the case 112 or if a considerable-sized obstacle underneath lifts the case 112, the case movement sensor 174 may sense the lift.

The bumper sensor 175 may sense rotation of the movable fixing part. For example, a magnet may be disposed in one side of the bottom of the movable fixing part, and a sensor for sensing a change in a magnetic field of the magnet may be disposed in the frame. When the movable fixing part rotates, the bumper sensor 175 senses a change in the magnetic field of the magnet. Thus, the bumper sensor 175 capable of sensing rotation of the movable fixing part may be implemented. When the bumper 112b collides with an external obstacle, the movable fixing part rotates integrally with the bumper 112b. As the bumper sensor 175 senses the rotation of the movable fixing part, the bumper sensor 175 may sense the collision of the bumper 112b.

The sensing unit 170 includes a tilt information acquisition unit 180 which acquires tilt information on a tilt of a traveling surface (S). By sensing a tilt of the body 110, the tilt information acquisition unit 180 may acquire the tilt information on inclination of the traveling surface (S) on which the body 110 is placed. In one example, the tilt information acquisition unit 180 may include a gyro sensing module 176a. The tilt information acquisition unit 180 may include a processing module (not shown) which converts a sensing signal from the gyro sensing module 176a into the tilt information. The processing module may be implemented as an algorithm or a program which is part of the controller 190. In another example, the tilt information acquisition unit 180 may include a magnetic field sensing module 176c, and acquire the tilt information based on sensing information about the magnetic field of the Earth.

The gyro sensing module 176a may acquire information on a rotational angular speed of the body 110 relative to the horizontal plane. Specifically, the gyro sensing module 176a may sense a rotational angular speed which is parallel to the horizontal plane about the X and Y axes orthogonal to each other. By merging a rotational angular speed (roll) about the X axis and a rotational angular speed (pitch) about the Y axis with the processing module, it is possible to calculate a rotational angular speed relative to the horizontal plane. By integrating the rotational angular speed relative to the horizontal plane, it is possible calculate a tilt value.

The gyro sensing module 176a may sense a predetermined reference direction. The tilt information acquisition unit 180 may acquire the tilt information based on the reference direction.

The azimuth angle sensor (AHRS) 176 may have a gyro sensing function. The azimuth angle sensor 176 may further include an acceleration sensing function. The azimuth angle sensor 176 may further include a magnetic field sensing function.

The azimuth angle sensor 176 may include a gyro sensing module 176a which performs gyro sensing. The gyro sensing module 176a may sense a horizontal rotational speed of the body 110. The gyro sensing module 176a may sense a tilting speed of the body 110 relative to a horizontal plane.

The gyro sensing module 176a may include a gyro sensing function regarding three axes orthogonal to each other in a spatial coordinate system. Information collected by the gyro sensing module 176a may be roll, pitch, and yaw information. The processing module may calculate a direction angle of a cleaner 1 or 1' by integrating the roll, pitch, and yaw angular speeds.

The azimuth angle sensor 176 may include an acceleration sensing module 176b which senses acceleration. The acceleration sensing module 176b has an acceleration sensing function regarding three axes orthogonal to each other in a spatial coordinate system. A predetermined processing module calculates a speed by integrating the acceleration, and may calculate a movement distance by integrating the speed.

The azimuth angle sensor 176 may include a magnetic field sensing module 176c which performs magnetic field sensing. The magnetic sensing module 176c may have a magnetic field sensing function regarding three axes orthogonal to each other in a spatial coordinate system. The magnetic field sensing module 176c may sense the magnetic field of the Earth.

The border signal detector 177 detects the border signal of the wire outside the moving robot 100. The border signal detector 177 may be disposed at the front of the body 110. In doing so, while the moving robot 100 moves in a forward direction which is the primary travel direction, it is possible to sense the border of the travel area in advance. The border signal detector 177 may be disposed in an inner space of the bumper 112b.

The border signal detector 177 may include a first border signal detector 177a and a second border signal detector 177b which are arranged leftward and rightward from each other. The first border signal detector 177a and the second border signal detector 177b may be disposed at the front of the body 110.

When the border signal is a magnetic field signal, the border signal detector 177 includes a magnetic field sensor. The border signal detector 177 may be implemented using a coil to detect a change in a magnetic field. The border signal detector 177 may sense at least a magnetic field of an upward-downward direction. The border signal detector 177 may sense a magnetic field on three axes which are spatially orthogonal to each other.

The GPS detector 178 may be provided to detect a GPS signal. The GPS detector 178 may be implemented using a Printed Circuit Board (PCB).

The cliff detector 179 detects presence of a cliff in a travel surface. The cliff detector 179 may be disposed at the front of the body 110 to detect presence of a cliff in the front of the moving robot 100.

The sensing unit 170 may include an opening/closing detector (not shown) which detects opening/closing of at least one of the first opening and closing door 117 or the second opening and closing door 118. The opening/closing detector may be disposed at the case 112.

The moving robot 100 includes the controller 190 which controls autonomous traveling. The controller 190 may process a signal from the sensing unit 170. The controller 190 may process a signal from the input unit 164.

The controller 190 may control the first driving motor 123(L) and the second driving motor 123(R). The controller 190 may control driving of the blade motor 132. The controller 190 may control outputting of the output unit 165.

The controller 190 includes a main board (not shown) which is disposed in the inner space of the body 110. The main board means a PCB.

The controller 190 may control autonomous traveling of the moving robot 100. The controller 190 may control driving of the traveling unit 120 based on a signal received from the input unit 164. The controller 190 may control driving of the traveling unit 120 based on a signal received from the sensing unit 170.

Previously, an example of setting the border of the traveling area of the moving robot 100 using a wire has been described, but the present invention is not limited thereto, and various wireless methods may be used. For example, the moving robot 100 may determine the current location and the traveling area based on the location information received from the traveling area or a location information transmitter installed around it, a GPS signal using a GPS satellite, or location information received from other terminals. The location information signal may be a GPS signal, an ultrasonic signal, an infrared signal, an electromagnetic signal, or a UWB (Ultra Wide Band) signal.

The moving robot 100 collects location information in order to set the traveling area and the border. The moving robot 100 collects location information by setting a point in an area as a reference location. The moving robot 100 may set any one of an initial starting point, a location of a charging station, and a location information transmitter as a reference location. The moving robot 100 may set a reference position, generate coordinates and a map for an area based on the reference position, and store it in the storage 166. When a map for a traveling area is generated, the moving robot 100 may move based on the stored map. The map for the traveling area may be an environment map including information such as borders and obstacles for the traveling area.

The map for the traveling area stored in the storage 166 is data in which predetermined information of the traveling area is stored in a predetermined format, at least one of a navigation map used for traveling, and a SLAM (Simultaneous localization and mapping) map used for location recognition, an obstacle recognition map in which information on the recognized obstacle is recorded, or a combination of one or more maps may be used.

In addition, a map of the traveling area stored in the storage 166 may be expressed in various forms, such as a grid map and a topology map. For example, the grid map may be a map in which the surrounding space is represented by cells or grids (hereinafter, referred to as grids) of the same size and the presence or absence of objects in each grid. For example, a white grid may represent an area without an object, and a black grid may represent an area with the object. Therefore, the line connecting the black grid may represent a border line (wall, obstacle, etc.) of a certain space. Depending on the embodiment, a predicted risk area may be set for stable traveling. For example, the predicted risk area may be one or more grids adjacent to a border line (wall, obstacle, etc.). Meanwhile, the predicted risk area may be represented by a gray grid. The color of the grid may be changed through image processing.

The size of the grid may be set differently. For example, if both the length and width of the moving robot 100 are 50 cm, the length and width of the grid may be set to 25 cm. In this case, the moving robot 100 may be positioned when the 2 by 2 grid is an area of an empty space. The length and width of the grid may be set to 10 cm. In this case, the moving robot 100 may be positioned when the 5 by 5 grid is an area of an empty space. Alternatively, the size of the grid may be set based on the operation unit 130 such as the blade 131 of the moving robot 100.

According to an embodiment, a cost representing predetermined information may be assigned to each grid. For example, a relatively high cost is given to a grid corresponding to the border line, and the controller 190 may control travelling based on the cost. The moving robot 100 according to an embodiment of the present invention may use a gradient method-based route planning using the concept of travelling cost to generate an optimal route from a starting point to a target point.

Hereinafter, controlling travel of the moving robot 100 will be described in detail with reference to FIGS. 8 to 19.

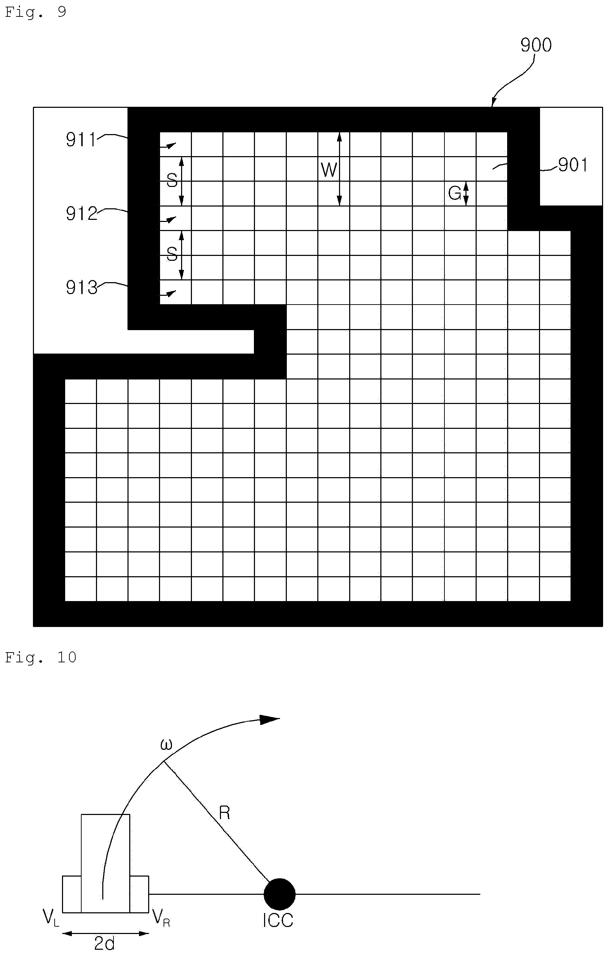

FIG. 8 is a flowchart of a method for controlling a moving robot according to an embodiment of the present invention, and FIGS. 9 to 19 are views referenced for description of a method for controlling a moving robot according to an embodiment of the present invention.

The moving robot 100 according to an aspect of the present invention may minimize damage to the lawn by minimizing a right angle pattern that rotates 90 degrees during pattern travelling. To this end, the controller 190 according to an aspect of the present invention may generate individual pattern routes after dividing the map according to a predetermined criterion, and generate a final pattern route by integrating the generated individual pattern routes.

Referring to FIG. 8, the controller 190 may divide a grid map corresponding to the travelling area into a plurality of multi-maps (S820).

For example, the controller 190 may divide the grid map corresponding to the travelling area into multi-maps composed of spaced lines (S820).

In addition, the controller 190 may divide the grid map into multi-maps based on a minimum turning radius capable of smooth turn (S820).

In addition, the controller 190 may divide the grid map into multi-maps composed of spaced lines based on a minimum turning radius capable of smooth turn (S820).

Meanwhile, when there is no grid map, the controller 190 may convert the environment map for the travelling area stored in the storage 166 into the grid map (S810).

FIG. 9 illustrates a grid map 900, a black grid represents a border line (wall, obstacle, etc.) of a travelling area, and a white grid represents a travelling area in which the moving robot 100 may travel.

The size G of the grid 901 included in the grid map 900 may be determined based on the size of the moving robot 100.

Alternatively, the size G of the grid 901 included in the grid map 900 may be determined based on a partial configuration of the moving robot 100.

For example, when the moving robot 100 is a lawn mower robot, it may be determined based on the size of the blade 131.

The blade 131 is rotatably provided on the lower side of the body 110 and rotates about a rotation axis extending in the vertical direction to mow the lawn.

In the lawn mower robot, the blade 131 is a core component for mowing the lawn. By setting the size G of the grid 901 based on the size of the blade 131, it is possible to control travelling in consideration of mowing efficiency.

According to an embodiment of the present invention, the size G of the grid 901 may be based on the size of the blade 131. For example, the controller 190 may set the size G of the grid 901 to be the same as the width of the blade 131 or to a value obtained by adding a predetermined margin to the width of the blade 131. have.

According to an exemplary embodiment of the present invention, lines included in the multi-maps may be spaced apart by at least twice the width of the blade 131 in the grid map.

The controller 190 may generate any one multi-map by collecting non-contiguous lines among a plurality of lines included in the grid map. The controller 190 may generate multi-maps with remaining lines that are not included in the generated multi-map.

In this case, the controller 190 may use the size of the blade 131 as a reference for how far apart lines included in any one multi-map are on the grid map.

For example, the controller 190 may extract the first line 911 on the grid map, and second line 912 by a reference distance S that is at least twice the width of the blade 131 based on the extracted first line 911, and a third line 913 separated by a reference distance S that is at least twice the width of the blade 131 based on the extracted second line 912. The controller 190 may generate multi-maps by repeating this process.

According to an embodiment of the present invention, damage to the lawn may be minimized by minimizing a right angle pattern that rotates 90 degrees during pattern travelling. To this end, the pattern travelling may be configured to include a circular motion for direction change and straight travel. The moving robot 100 may move along a predetermined line in the grid map and then change the direction in a direction opposite to the travelling direction in which it was traveling straight through a circular motion rather than a 90 degrees rotation when changing direction. The moving robot 100 may move along a straight route parallel to the straight route passed by rotating 180 degrees after traveling straight. The moving robot 100 may repeat straight travel and the rotation of a circular motion for direction change, and mow the lawn without gap while moving the entire travelling area.

According to an embodiment of the present invention, the controller 190 may determine a width W for division of the grid map based on the minimum turning radius R for changing the direction in a direction opposite to the travelling direction in a circular motion during straight travelling.

FIG. 10 is a diagram referred to in the description of the minimum turning radius R, and an example of calculating the minimum turning radius R will be described with reference to FIG. 10.

For example, when the rotation speed VL of the first wheel 121 (L) and the rotation speed VR of the second wheel 121 (R) are different, the body 110 may perform rotational motion against the ground.

The moving robot 100 may rotate based on an instantaneous center of curvature (ICC). The instantaneous rotation center (ICC) is a point where the extension lines of the rotation shaft of the first wheel 121 (L) and the second wheel 121 (R) meet, and may be located on the same line of the rotation shaft of the two wheels.

In the example of FIG. 10, when the distance between the first wheel 121(L) and the second wheel 121(R) is 2d, as in Equation 1 below, the minimum turning radius R may be obtained based on the rotation the speed VL of the first wheel 121(L) and the rotation speed VR of the second wheel 121 (R).

【Equation 1】

$$V_L = \omega (R+d)$$

$$V_R = \omega (R-d)$$

$$\omega = (V_L - V_R)/2d$$

$$R = 2d(V_L + V_R)(V_L - V_R)$$

That is, the minimum turning radius may be determined based on the rotational speed of the wheel as shown in Equation 2 below, and when rotating during pattern travelling, the minimum turning radius R may also be set according to the set speed of the first wheel 121 (L) and the second wheel 121 (R).

【Equation 2】

$$R = 2d(Vmax + Vmin)/(Vmax - Vmin)$$

The width for division of the grid map may be determined based on a minimum turning radius for changing a direction in a direction opposite to the travelling direction in a circular motion during straight travelling. For example, the width W may be set to be equal to or greater than twice the minimum rotation radius R.

In addition, the grid size G may be determined based on the size of the blade 131.

In addition, the width W may be set based on the minimum turning radius R and the size of the blade 131.

【Equation 3】

$$W = n*G \text{ (n is an integer)}$$

That is, the width W may be determined as the minimum value among a number that satisfies a first condition equal to or greater than twice the minimum turning radius R and a second condition that is an integer multiple of the blade 131 size.

The controller 190 may generate the multi-maps by dividing the grid map by a number corresponding to a value obtained by dividing the width W by the grid size G of the grid map. Referring to the example of FIG. 9, the width W is three times the grid size G, and the grid map may be divided into three multi-maps.

Meanwhile, the controller 190 may generate multi-maps by dividing the grid map in units of the width W and extracting one line per unit of the divided width.

The controller 190 may generate first to n-th unit maps from the grid map in units of the width W, and generate a first multi-map by collecting first lines from the first to n-th unit maps, and, generate a second multi-map by collecting second lines from the first to nth unit maps. The controller 190 may repeat the same process to generate n multi-maps.

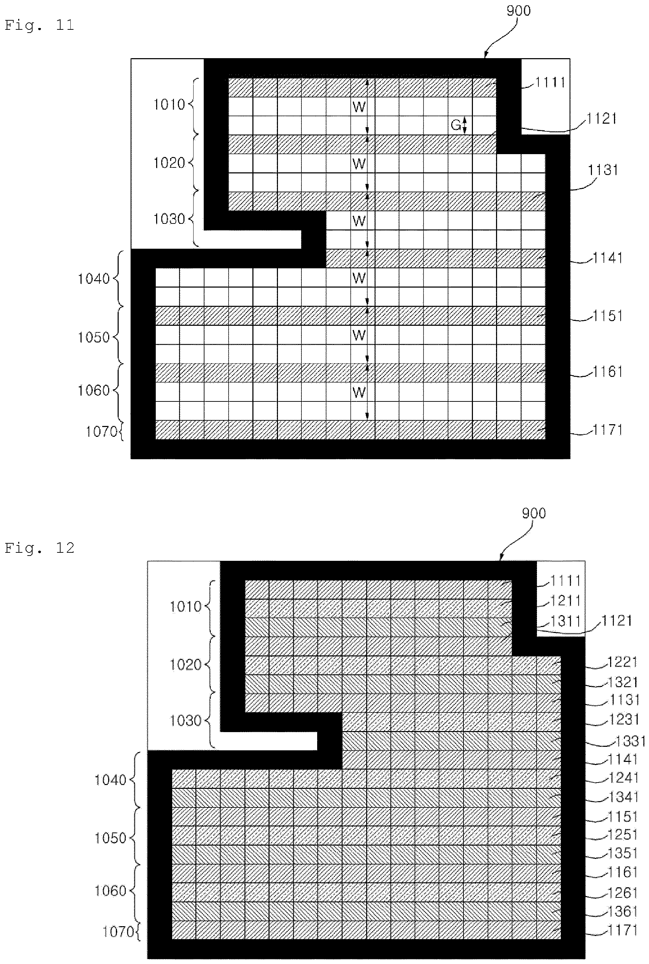

Referring to FIG. 11, the controller 190 may divide a grid map in units of width W. A map divided by width W may be named as a unit map.

Referring to FIG. 11, the grid map may be divided into a total of seven unit maps 1010, 1020, 1030, 1040, 1050, 1060, and 1070. At this time, since the number of lines of the grid map may not be an integer multiple of the width W, some unit maps 1070 may be smaller than other unit maps 1010, 1020, 1030, 1040, 1050, 1060 depending on the shape and size of the grid map. 1060). Since the specific unit map 1070 has no second and third lines, it will not affect the generation of the second and third multi-maps.

Meanwhile, the controller 190 may group the first lines 1111, 1121, 1131, 1141, 1151, 1161, 1171 in the unit maps 1010, 1020, 1030, 1040, 1050, 1060, 1070.

Referring to FIG. 12, the controller 190 may group second lines 1211, 1221, 1231, 1241, 1251, and 1261 in the unit maps 1010, 1020, 1030, 1040, 1050, 1060, 1070, and the third lines 1311, 1321, 1331, 1341, 1351, 1361 in the unit maps 1010, 1020, 1030, 1040, 1050, 1060, and 1070.

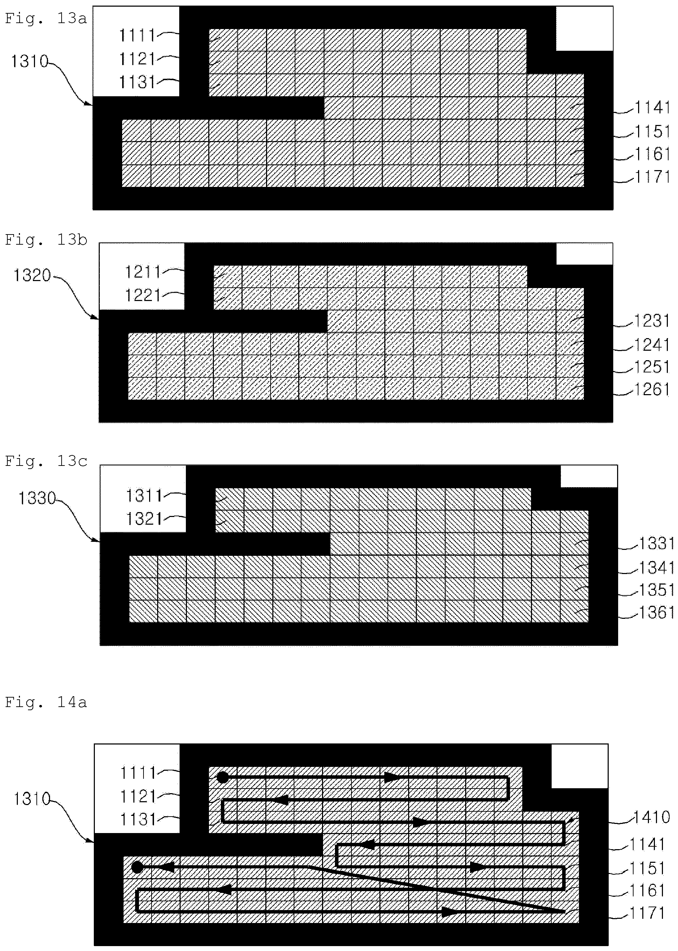

FIGS. 13a to 13c illustrate generated multi-maps.

FIG. 13a shows the multi-map 1310 generated by collecting the first lines 1111, 1121, 1131, 1141, 1151, 1161, and 1171 from the first to nth unit maps 1010, 1020, 1030, 1040, 1050, 1060, 1070.

FIG. 13b shows a second multi-map 1320 generated by collecting the second lines 1211, 1221, 1231, 1241, 1251, 1261 from the first to nth unit maps 1010, 1020, 1030, 1040, 1050, 1060, 1070.

FIG. 13c shows a third multi-map 1330 generated by collecting the third lines 1311, 1321, 1331, 1341, 1351, 1361 from the first to nth unit maps 1010, 1020, 1030, 1040, 1050, 1060, 1070.

The controller 190 may generate individual pattern routes using respective multi-maps (S830). A final pattern route may be generated by integrating individual pattern routes generated from the multi-maps (S840).

Thereafter, the controller 190 may control the travelling unit 120 to pattern travel in the travelling area based on the final pattern route.

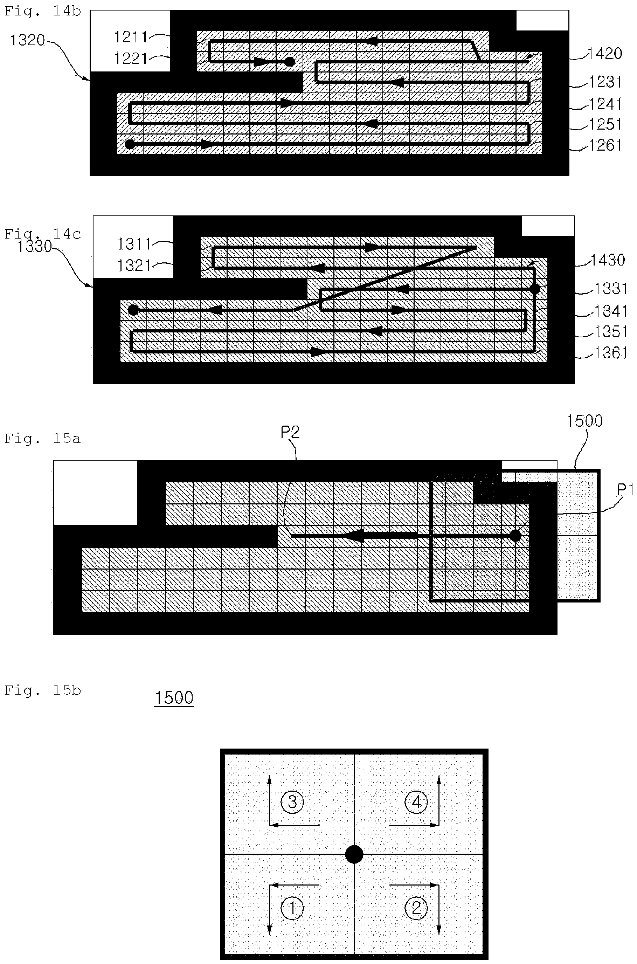

FIGS. 14a to 14c illustrate individual pattern routes 1410, 1420, and 1430 generated in each of the multi-maps of FIGS. 13a to 13c.

The controller 190 may establish an individual pattern path 1410 so that pass through the lines 1111, 1121, 1131, 1141, 1151, 1161, and 1171 in the first multi-map 1310 with minimal direction change.

In addition, the controller 190 may establish an individual pattern path 1420 so that passes through the lines 1211, 1221, 1231, 1241, 1251, and 1261 in the second multi-map 1320 with minimal direction change.

In addition, the controller 190 may establish an individual pattern path 1430 passes through the lines 1311, 1321, 1331, 1341, 1351, and 1361 in the third multi-map 1330 with minimal direction change.

Meanwhile, a starting point or an ending point of generating an individual pattern route of a multi-map may be based on at least one starting point or ending point among other multi-maps.

When generating an individual pattern route in a multi-map, the controller 190 may determine a starting point based on the ending point of the individual pattern route of the previously generated multi-map.

For example, the starting point of the individual pattern route 1420 of the second multi-map 1320 may be determined based on the ending point of the individual pattern route 1410 of the first multi-map 1310. The starting point of the individual pattern route 1420 of the second multi-map 1320 may be determined as a point located at the shortest distance from the ending point of the individual pattern route 1410 of the first multi-map 1310 from among points at which a smooth turn is possible. In the same way, the starting point of the individual pattern route 1430 of the third multi-map 1330 may be determined based on the individual pattern route 1420 of the second multi-map 1320.

Meanwhile, the controller 190 may generate the individual pattern routes in a zigzag pattern in which the major axis and the minor axis are alternately traveling straight. Accordingly, it is possible to effectively create an individual pattern route that runs seamlessly in multi-maps. Even if a route plan is established in a zigzag pattern in an individual pattern route, the shortened route for return conversion of the individual pattern route is separated from each other in the integration process because the minor axis routes for changing the direction of individual pattern routes are separated during the integration process, so it is possible to prevent rotation by 90 degrees.

Meanwhile, when it is necessary to select a pattern direction in an arbitrary grid, the controller 190 may select a shortest route among areas in which a route is not generated. Accordingly, it is possible to establish a route through which all areas of the multi-map may be passed most quickly.

Alternatively, when it is necessary to select a pattern direction in an arbitrary grid, the controller 190 may generate the individual pattern route by selecting a pattern direction with a first priority in an area with a small number of obstacles, and the pattern direction with a second priority in an area in which no route is generated. That is, it is possible to minimize the possibility of establishing a route in which multiple directions are changed to avoid obstacles by prioritizing the number of obstacles.

FIGS. 15a to 15h are diagrams referred to for description of generating an individual pattern route and selecting a pattern direction, and illustrate processes of generating the individual pattern route 1430 of FIG. 14c.

Referring to FIG. 15a, a pattern direction may be selected at a starting point P1. In this case, the pattern direction selection criterion may be at least one of an area in which the number of obstacles is relatively small and an area in which no route is generated. Depending on the setting, a higher priority may be given to one of the two criteria. When there are directions that do not have a significant difference according to the above two criteria, the pattern direction may be determined according to a randomly set priority direction.

FIG. 15b illustrates the zigzag pattern progress direction reference 1500, which divides the zigzag pattern progress direction into four, and indicates the priority order of the corresponding pattern progress direction with circular numbers. FIG. 15b is an example, and the present invention is not limited thereto.

Since the route has not yet been created and there are no obstacles in nearby areas, the pattern direction of the starting point P1 may be selected for a pattern direction that moves a major axis straight in the left direction and then minor axis straight in a downward direction according to the reference of FIG. 15b.

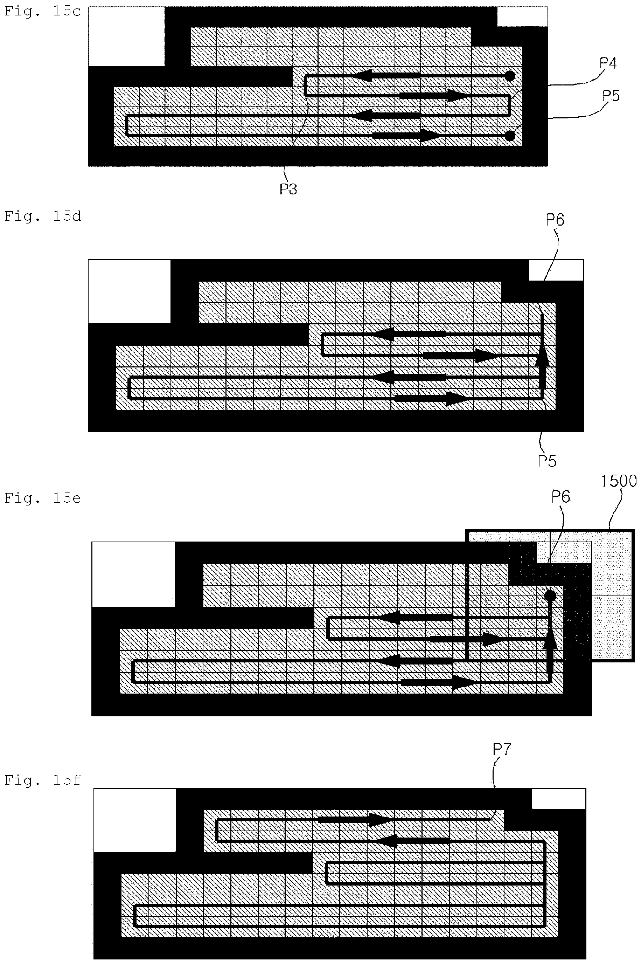

Referring to FIG. 15c, it is necessary to search the pattern direction and the next position again at the arrival point P5 by passing through points P2, P3, and P4 from the starting point P1 according to the zigzag pattern.

Referring to FIG. 15d, the controller 190 may search for an empty area in which no route is generated and select the shortest route P6 from the arrival point P5 as the next location.

Referring to FIG. 15e, the controller 190 may select a pattern direction according to a zigzag pattern progress direction reference 1500 at a point P6.

Referring to FIG. 15f, the controller 190 may select a pattern direction from a point P6 to an upper left side in which there are many empty areas in which no route is generated, and accordingly, a zigzag pattern may proceed to P7.

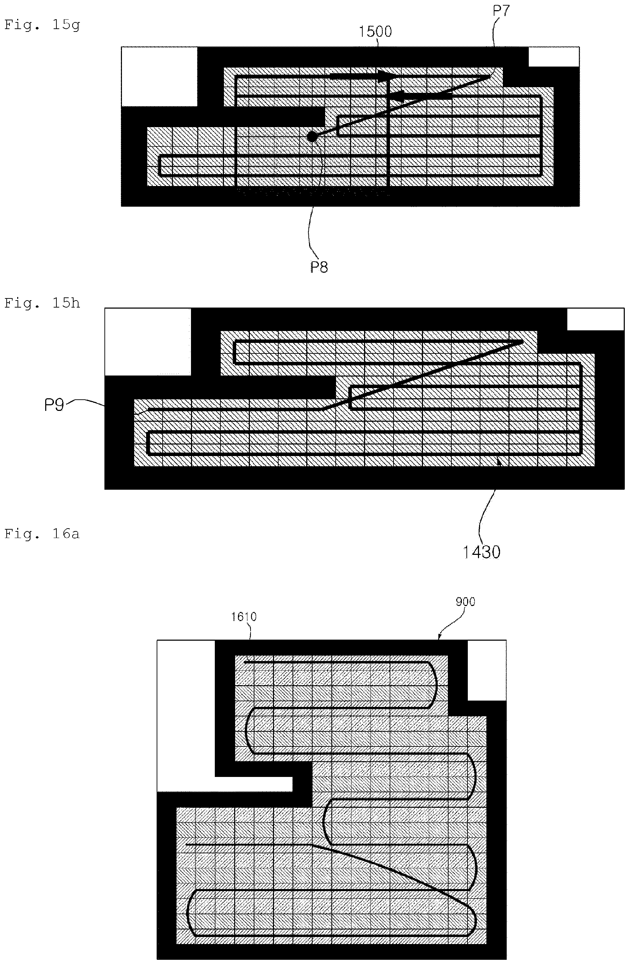

Referring to FIG. 15g, the controller 190 may search for an empty area in which no route is generated and select the shortest route P8 from the arrival point P7 as the next location. In addition, the controller 190 may select a pattern direction according to the zigzag pattern traveling direction reference 1500 at point P8.

Referring to FIG. 15h, when there is no empty area in which a path is no longer generated since the ending point P9 is reached, generation of an individual pattern route 1430 may be terminated.

The controller 190 may generate a final pattern route on the grid map by mapping the individual pattern routes 1410, 1420, and 1430 generated from the multi-maps 1310, 1320, and 1330 to grids corresponding to the original grid map before division, respectively(S840).

FIG. 16a illustrates an example in which the individual pattern routes 1410 generated in the first multi-map 1310 are mapped to corresponding grids of the grid map. Referring to FIG. 16a, a first individual pattern route 1610 mapped on a grid map may be identified.

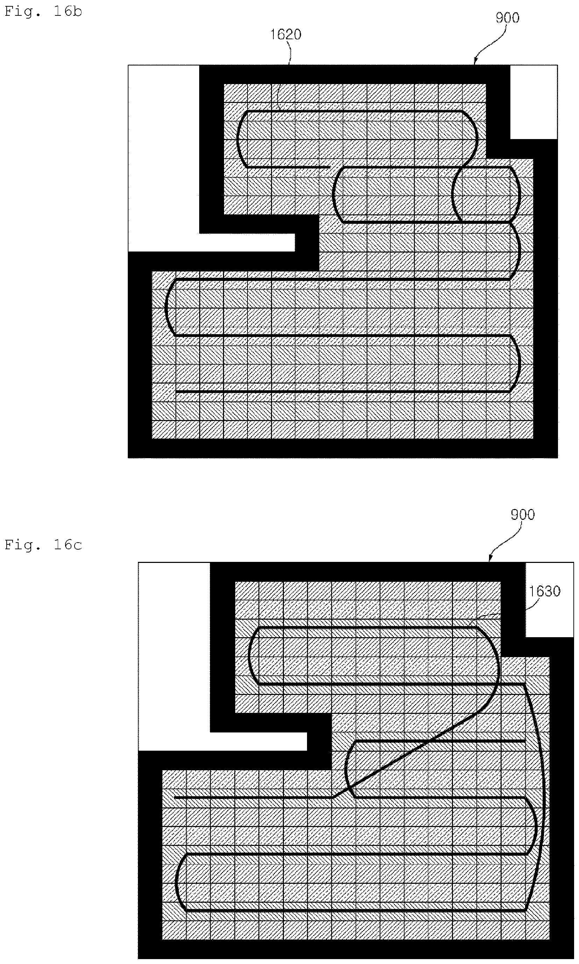

FIG. 16b illustrates an example in which the individual pattern route 1420 generated in the second multi-map 1320 is mapped to corresponding grids of the grid map. Referring to FIG. 16b, a second individual pattern route 1620 mapped on a grid map may be identified.

FIG. 16c illustrates an example in which the individual pattern routes 1430 generated in the third multi-map 1330 are mapped to corresponding grids of the grid map. Referring to FIG. 16c, a third individual pattern route 1630 mapped on a grid map may be identified.

According to an embodiment of the present invention, the width may be determined based on the minimum radius at which the radius is maintained by calculating a minimum turning radius capable of smooth turn. In addition, it is possible to create individual pattern routes using multi-maps generated by dividing the width based on the blade 131 and integrate them into one pattern route.

Accordingly, a route plan for a smooth turn may be established so as to minimize a right angle pattern, and a pattern route may be efficiently managed by using a multi-map.

According to an exemplary embodiment of the present invention, damage to the lawn may be reduced by minimizing a right angle pattern, and damage to the lawn may be minimized by reducing an area that is repeatedly driven during pattern travelling.

In addition, according to an embodiment of the present invention, it is possible to increase efficiency when generating a path.

According to an embodiment of the present invention, when it is necessary to select a next location between multi-maps, the controller 190 may select the next location on the different multi-maps based on the ending point of the individual pattern route of the previously generated multi-map and the minimum turning radius R for changing direction in a direction opposite to the travelling direction in a circular motion while traveling straight.

In this case, the controller 190 selects the next position as the shortest route among the grids separated by more than the minimum rotation radius based on the grid corresponding to the ending point of the individual pattern route of the previously generated multi-map in the grid map.

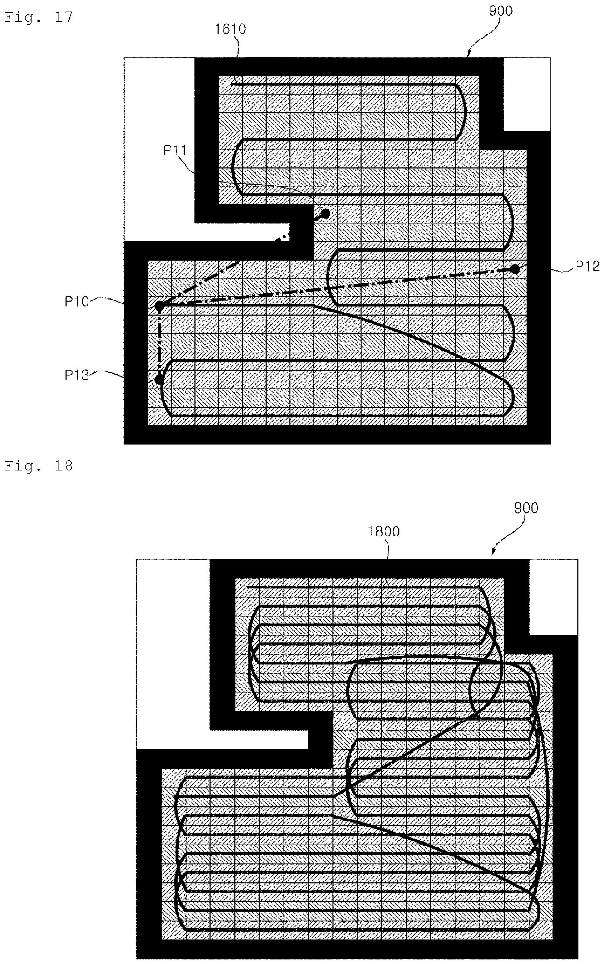

Referring to FIG. 17, when selecting the next location based on another multi-map at the ending point P10 of the first individual pattern route 1610, one of P11, P12, P13 may be selected as the starting point of the second individual pattern route 1620 using a minimum turning radius R as a reference.

The grid corresponding to the second multi-map 1320 directly attached at the ending point P10 may not be selected because the minimum rotation radius R is not secured. Accordingly, P13 located at the shortest distance among the grids P11, P12, and P13 separated by the minimum turning radius may be selected as the next position.

The starting point or the ending point of the individual pattern route generation of a multi-map may be based on at least one starting point or ending point among other multi-maps. When generating an individual pattern route in a multi-map, the controller 190 may determine a starting point based on the ending point of the individual pattern route of the previously generated multi-map.

Meanwhile, the controller 190 may correspond the individual pattern routes 1410, 1420, 1430 generated from the multi-maps 1310, 1320, 1330 to the grid map(ex, 1610, 1620, 1630), and generate the final pattern route by connecting grids corresponding to the starting and ending points of the individual pattern routes.

FIG. 18 illustrates a final pattern route 1800 generated by connecting the first to third individual pattern routes 1610, 1620, and 1630 illustrated in FIGS. 16a to 16c.

FIG. 19 is a diagram illustrating a pattern travelling which are driven while mowing the lawn, a movement route other than pattern travelling, and a movement route between multi-maps in the final pattern route of FIG. 18.

Referring to FIGS. 18 and 19, a pattern route according to an embodiment of the present invention does not include a right angle pattern. Accordingly, it is possible to prevent damage to the lawn due to rotation in place during pattern travelling.

In addition, since the pattern route according to an embodiment of the present invention travels straight ahead for a certain distance and changes its direction to a smooth turn, it is possible to maintain high efficiency of zigzag pattern travelling in travelling other than direction change.

The moving robot and a method of controlling the moving robot according to the present invention are not limited to the configuration and method of the embodiments described as described above, but the embodiments may be configured by selectively combining all or part of each of the embodiments so that various modifications may be made.

Likewise, while depicting the actions in the drawings in a specific order, it should not be understood that such actions should be performed in that particular order or sequential order shown, or that all illustrated actions should be performed in order to obtain a desired result. In certain cases, multitasking and parallel processing may be advantageous.

Meanwhile, the control method of a moving robot according to an embodiment of the present invention may be implemented as a code that may be read by a processor on a recording medium that may be read by a processor. The processor-readable recording medium includes all types of recording devices that store data that may be read by the processor. In addition, the processor-readable recording medium is distributed over a computer system connected through a network, so that the processor-readable code may be stored and executed in a distributed manner.

In addition, although the preferred embodiments of the present invention have been illustrated and described above, the present invention is not limited to the specific embodiments described above, and. In addition, various modifications are possible by those of ordinary skill in the technical field to which the present invention belongs without departing from the gist of the present invention claimed in the claims, and these modifications should not be individually understood from the technical idea or prospect of the present invention.

## Claims

**1.** A moving robot comprising:

a body configured to define an exterior;
a travelling unit configured to move the body against a travelling surface of a travelling area; and
a controller configured to divide a grid map corresponding to the travelling area into multi-maps composed of spaced lines, generate individual pattern routes using each of the multi-maps, and generate a final pattern route by integrating individual pattern routes generated from the multi-maps, and control the travelling unit to pattern travel in the travelling area based on the final pattern route.

**2.** The moving robot of claim 1, further comprising: a blade rotatably provided under the body, and wherein, a grid size of the grid map is based on a size of the blade. In this case, the lines included in the multi-maps may be spaced apart at least twice the size of the blade in the grid map.

**3.** The moving robot of claim 2, wherein the lines included in the multi-maps may be spaced apart at least twice the size of the blade in the grid map.

**4.** The moving robot of claim 1, wherein a width for division of the grid map is based on a minimum turning radius for changing a direction in a direction opposite to a travelling direction in a circular motion during straight travelling.

**5.** The moving robot of claim 1, further comprising: a blade rotatably provided under the body, and wherein the width is determined as the minimum value among a number that satisfies a first condition greater than or equal to twice the minimum rotation radius, and a second condition greater than or equal to an integer multiple of the blade size.

**6.** The moving robot of claim 4, wherein the controller generates the multi-maps by dividing the grid map by a number corresponding to a value obtained by dividing the width by the grid size of the grid map.

**7.** The moving robot of claim 1, wherein the controller generates multi-maps by dividing the grid map in units of the width and extracting one line per unit of the divided width.

**8.** The moving robot of claim 1, wherein the controller generates a first multi-map by generating first to nth unit maps of the grid map in the width unit, generates a first multi-map by collecting first lines from the first to nth unit maps, and, generates a second multi-map by collecting second lines from the first to the n-th unit map.

**9.** The moving robot of claim 1, wherein the pattern travelling includes a circular motion for direction change and straight travel.

**10.** The moving robot of claim 1, wherein the controller generates a final pattern route on the grid map by mapping individual pattern routes generated from the multi-maps to grids corresponding to the original grid map before division.

**11.** The moving robot of claim 1, wherein the controller generates the individual pattern routes in a zigzag pattern in which a major axis and a minor axis are alternately traveling straight.

**12.** The moving robot of claim 1, wherein, when it is necessary to select a pattern direction in an arbitrary grid, the controller generates the individual pattern route by selecting a pattern direction with a first priority in an area with a small number of obstacles, and selecting the pattern direction with a second priority in an area in which no route is generated.

**13.** The moving robot of claim 1, wherein, when it is necessary to select a pattern direction in an arbitrary grid, the controller selects a shortest route from an area in which a route is not generated.

**14.** The moving robot of claim 1, wherein a starting point or an ending point of generating an individual pattern route of a multi-map is based on at least one starting point or ending point among other multi-maps.

**15.** The moving robot of claim 1, wherein, when generating an individual pattern route in a multi-map, the controller determines a starting point based on an ending point of an individual pattern route of the multi-map previously generated.

**16.** The moving robot of claim 1, wherein when it is necessary to select the next location between multi-maps, the controller selects a next location from different multi-map based on the ending point of an individual pattern route of the multi-map previously generated and the minimum turning radius for changing the direction in a direction opposite to the travelling direction by circular motion during straight travelling.

**17.** The moving robot of claim 16, wherein the controller selects a next location as a shortest route among grids separated by more than the minimum rotation radius based on a grid corresponding to an ending point of an individual pattern route of the previously generated multi-map in the grid map.

**18.** The moving robot of claim 1, wherein the controller generates the final pattern route by matching individual pattern routes generated from the multi-maps on the grid map, and connecting grids corresponding to the starting and ending points of the individual pattern routes.

**19.** The moving robot of claim 1, wherein a grid size of the grid map may be based on the size of the moving robot.

Fig. 1

100
110
112
117
118
113
157
177a(177)
156
171a(171)
177b(177)
165
U
Le
F
R
Ri
D
171b(171)
164
121(120)

Fig. 2

172
172c
172b
172a
159
159b
159a
112
112b
177b(177)
177a(177)
158
112c
111a-2
111a-1
U
Ri
Le
D
125(R)
111ba
111ba
125(L)
121(L)
121(R)

Fig. 3

113
118
117
112
112b
177
112c
111a
111af
125(L)
125(R)
125
121a
121b
121
120
U
R
F
D

Fig. 4

111bb
111b
111ba
111ba
112c
177b
125(R)
177a
112b
125(L)
112
111
110
116
114
115
131
111a-1
111a-2
111a
121(R)
121(L)
F
Ri
Le
R
119b
123(R)
123(L)
119a
123(120)

Fig. 5

211
211a
211b
200
210
220
232a
232b
232
231
234
230
U
F
Le
Ri
R
D

Fig. 6

220
250a
250
250b
240
230

U
Ri
Le
D

Fig. 7

170
SENSING UNIT
REMOTE SIGNAL DETECTOR
171
OBSTACLE DETECTOR
172
RAIN DETECTOR
173
CASE MOVEMENT SENSOR
174
BUMPER SENSOR
175
AZIMUTH ANGLE SENSOR
176
GYRO SENSING MODULE
176a
ACCELERATION SENSING MODULE
176b
MAGNETIC FIELD SENSING MODULE
176c
BORDER SIGNAL DETECTOR
177
GPS DETECTOR
178
CLIFF DETECTOR
179
164
165
INPUT UNIT
OUTPUT UNIT
190
CONTROLLER
FIRST DRIVING MOTOR
123(L)
SECOND DRIVING MOTOR
123(R)
BLADE MOTOR
132
166
167
STORAGE
COMMUNICATION UNIT

Fig. 8

start
converting environment map into grid map
S810
dividing grid map into multi-maps
S820
generating individual pattern routes in each of multi-maps
S830
integrating individual pattern routes
S840
end

Fig. 9

900
911
912
913
901
S
S
W
G

Fig. 10

ω
R
$V_L$
$V_R$
ICC
2d

Fig. 11

900
1010
1020
1030
1040
1050
1060
1070
1111
1121
1131
1141
1151
1161
1171
W
G


Fig. 12

900
1010
1020
1030
1040
1050
1060
1070
1111
1211
1311
1121
1221
1321
1131
1231
1331
1141
1241
1341
1151
1251
1351
1161
1261
1361
1171

Fig. 13a

1310
1111
1121
1131
1141
1151
1161
1171

Fig. 13b

1320
1211
1221
1231
1241
1251
1261

Fig. 13c

1330
1311
1321
1331
1341
1351
1361

Fig. 14a

1310
1111
1121
1131
1410
1141
1151
1161
1171

Fig. 14b

1320 1211 1221 1420 1231 1241 1251 1261

Fig. 14c

1330 1311 1321 1430 1331 1341 1351 1361

Fig. 15a

P2 1500 P1

Fig. 15b 1500

③
④
①
②

Fig. 15c
P4
P5
P3
Fig. 15d
P6
P5
Fig. 15e
1500
P6
Fig. 15f
P7

Fig. 15g

P7
1500
P8

Fig. 15h

P9
1430

Fig. 16a

1610
900

Fig. 16b

900
1620

Fig. 16c

900
1630

Fig. 17

900
1610
P11
P12
P10
P13

Fig. 18

900
1800

Fig. 19

Pattern route
Movement route other than pattern travelling
Movement route between multi-maps
900
1800

Fig. 20

2
1

## INTERNATIONAL SEARCH REPORT

International application No.
**PCT/KR2021/002925**

**A. CLASSIFICATION OF SUBJECT MATTER**

**B25J 11/00**(2006.01)i; **B25J 9/16**(2006.01)i; **B25J 9/00**(2006.01)i; **A01D 34/00**(2006.01)i

According to International Patent Classification (IPC) or to both national classification and IPC

**B. FIELDS SEARCHED**

Minimum documentation searched (classification system followed by classification symbols)

B25J 11/00(2006.01); A01D 34/00(2006.01); A47L 9/28(2006.01); B25J 13/08(2006.01); G05D 1/02(2006.01); G06Q 50/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 로봇(robot), 잔디깎기(lawn mower), 격자지도(grid map), 경로(path), 분할(divide), 패턴(pattern)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0123678 A (LG ELECTRONICS INC.) 01 November 2019 (2019-11-01) See paragraphs [0042], [0170] and [0171] and figures 1, 8 and 9. | 1-19 |
| A | KR 10-0834571 B1 (ELECTRONICS AND TELECOMMUNICATIONS RESEARCH INSTITUTE) 02 June 2008 (2008-06-02) See paragraphs [0034]-[0066] and figures 1 and 2. | 1-19 |
| A | KR 10-1578893 B1 (EVERYBOT INC.) 18 December 2015 (2015-12-18) See paragraphs [0086]-[0093] and figures 5-9. | 1-19 |
| A | KR 10-2013-0101913 A (KOREA UNIVERSITY RESEARCH AND BUSINESS FOUNDATION) 16 September 2013 (2013-09-16) See paragraphs [0026]-[0035] and figures 1-5. | 1-19 |
| A | US 2016-0165795 A1 (IROBOT CORPORATION) 16 June 2016 (2016-06-16) See paragraphs [0055]-[0079] and figures 4A-5. | 1-19 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 June 2021** | **25 June 2021** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2019)

**INTERNATIONAL SEARCH REPORT**
**Information on patent family members**

International application No.
**PCT/KR2021/002925**

| Patent document cited in search report | Publication date (day/month/year) | Patent family member(s) | Publication date (day/month/year) |
|---|---|---|---|
| KR 10-2019-0123678 A | 01 November 2019 | AU 2019-247309 A1 | 26 November 2020 |
| | | AU 2019-248254 A1 | 26 November 2020 |
| | | AU 2019-248255 A1 | 26 November 2020 |
| | | AU 2019-248256 A1 | 26 November 2020 |
| | | AU 2019-248257 A1 | 26 November 2020 |
| | | AU 2019-248258 A1 | 26 November 2020 |
| | | AU 2019-248261 A1 | 26 November 2020 |
| | | EP 3774203 A1 | 17 February 2021 |
| | | EP 3778144 A1 | 17 February 2021 |
| | | EP 3778145 A1 | 17 February 2021 |
| | | EP 3778146 A1 | 17 February 2021 |
| | | EP 3778147 A1 | 17 February 2021 |
| | | EP 3778148 A1 | 17 February 2021 |
| | | EP 3778149 A1 | 17 February 2021 |
| | | EP 3778150 A1 | 17 February 2021 |
| | | EP 3782774 A1 | 24 February 2021 |
| | | KR 10-2019-0117368 A | 16 October 2019 |
| | | KR 10-2019-0123673 A | 01 November 2019 |
| | | KR 10-2019-0123674 A | 01 November 2019 |
| | | KR 10-2019-0123675 A | 01 November 2019 |
| | | KR 10-2019-0123676 A | 01 November 2019 |
| | | KR 10-2019-0123677 A | 01 November 2019 |
| | | KR 10-2019-0123679 A | 01 November 2019 |
| | | KR 10-2019-0124138 A | 04 November 2019 |
| | | KR 10-2249808 B1 | 10 May 2021 |
| | | US 2021-0096574 A1 | 01 April 2021 |
| | | WO 2019-194415 A1 | 10 October 2019 |
| | | WO 2019-194625 A1 | 10 October 2019 |
| | | WO 2019-194627 A1 | 10 October 2019 |
| | | WO 2019-194628 A1 | 10 October 2019 |
| | | WO 2019-194629 A1 | 10 October 2019 |
| | | WO 2019-194631 A1 | 10 October 2019 |
| | | WO 2019-194632 A1 | 10 October 2019 |
| | | WO 2019-194634 A1 | 10 October 2019 |
| | | WO 2019-194636 A1 | 10 October 2019 |
| KR 10-0834571 B1 | 02 June 2008 | KR 10-2008-0029239 A | 03 April 2008 |
| KR 10-1578893 B1 | 18 December 2015 | CN 105283109 A | 27 January 2016 |
| | | CN 105283109 B | 26 June 2018 |
| | | EP 3138458 A1 | 08 March 2017 |
| | | EP 3138458 B1 | 23 September 2020 |
| | | KR 10-2015-0126235 A | 11 November 2015 |
| | | WO 2015-167060 A1 | 05 November 2015 |
| KR 10-2013-0101913 A | 16 September 2013 | KR 10-1382982 B1 | 09 April 2014 |
| US 2016-0165795 A1 | 16 June 2016 | CN 106662452 A | 10 May 2017 |
| | | EP 3232762 A1 | 25 October 2017 |
| | | US 10274954 B2 | 30 April 2019 |
| | | US 2016-0363933 A1 | 15 December 2016 |
| | | US 2019-0250604 A1 | 15 August 2019 |
| | | US 9420741 B2 | 23 August 2016 |
| | | WO 2016-099616 A1 | 23 June 2016 |

Form PCT/ISA/210 (patent family annex) (July 2019)

**INTERNATIONAL SEARCH REPORT**
**Information on patent family members**

International application No.
**PCT/KR2021/002925**

| Patent document cited in search report | Publication date (day/month/year) | Patent family member(s) | Publication date (day/month/year) |
|---|---|---|---|

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20150125508